# EUROPEAN PATENT SPECIFICATION

(11) **EP 0 382 818 B1**
(45) Date of publication and mention of the grant of the patent: **06.09.1995**
(21) Application number: 89907905.7
(22) Date of filing: 20.06.1989
(51) Int. Cl.: G01F 3/20

(54) **A FLUID FLOW METER**
DURCHFLUSSMESSER FÜR FLUID
DEBITMETRE DE FLUIDE

(30) Priority: 29.06.1988 US 212955
(43) Date of publication of application: 22.08.1990
(73) Proprietor: MEASUREMENT TECHNOLOGY INTERNATIONAL, Santa Fe Springs, California 90670 (US)
(72) Inventor: INGMAN, Dov, IL-34980 Haifa (IL)
(74) Representative: Alexander, Thomas Bruce
(86) International application number: US8902686
(87) International publication number: WO9000248

(56) References cited:
- JP-A- 0 595 917
- US-A- 0 398 013
- US-A- 3 015 953
- US-A- 4 409 830
- US-A- 4 594 890
- PATENT ABSTRACTS OF JAPAN vol. 8, no. 141 (P-283)30 June 1984 & JP-A-59 040 118

## Description

### FIELD OF THE INVENTION

The present invention relates generally to devices for measuring volumetric fluid flow and more specifically to a travelling wave flow meter having a thin flexible membrane whose flexing movement is operative to permit passage of fluid in travelling waves.

### BACKGROUND OF THE INVENTION

There are known various types of flow meter which utilize a member which vibrates or undulates as fluid flows therepast. Fluid flow rates can be determined from the frequency of vibration or rate of undulation, which is generally proportional to the rate of fluid flow.

An early form of fluid meter having an undulating spring confined in a fluid flow chamber and a mechanical counter for indicating the amount of fluid flowing therethrough is described in U.S. Patent 398,013 (Welker). A more recent travelling wave flow meter, utilizing an undulating membrane formed of piezoelectric material which generates electrical signals as a function of the rate of undulation is described in U.S. Patents 4,358,954 and 4,409,830 (both to de Jong).

The flow meter disclosed in the above-referenced U.S. Patents to de Jong is, however, limited in use to measurement of noncompressible fluids, such as liquids. If used for compressible fluids, such as gases, under a relatively high flow rate, the membrane would be liable to give rise to stretching thereof across a fluid flow path with which it is associated, so as to block fluid flow therealong.

Further examples of flow meters are found in US-A-4,594,890 and JP-A-59,040,118. US-A-4,594,890 describes a fluid meter incorporating a bi-stable resilient member positioned in a housing in which the bi-stable member is caused to oscillate in a single oscillatory mode as a result of fluid flow. JP-A-59,040,118 describes a flow meter comprising a cabinet in which there is provided in a bent form a flexible, belt-shaped band piece whose ends are fixed to rods at the upstream and downstream ends.

### SUMMARY OF THE INVENTION

It is an aim of the present invention to provide for the measurement of a wide range of compressible and noncompressible fluid flows, a positive displacement quantum fluid flow meter which overcomes disadvantages of the prior art.

There is provided, therefore, in accordance with a first aspect of the invention, a fluid flow meter comprising a housing having an inlet and an outlet fluid port and defining a fluid flow path therebetween; a flexible membrane defining a pair of opposing faces and being mounted by opposed first and second ends in said fluid flow path such that said pair of opposing faces simultaneously define with said housing fluid impermeable seals at at least two different locations along said flow path, said membrane being operative to flex so as to permit passage therepast of discrete quanta of fluid, each having a known volume; means for generating electrical signals corresponding to flexure of said membrane; and monitoring means for receiving the electrical signals and thereby determining a fluid flow rate along said flow path, characterized in that said first end of the membrane is mounted downstream of the inlet fluid port and guide apparatus for guiding the membrane is mounted within the housing adjacent at least said first end to abut the membrane in either of two respective positions taken up just before and after release of a quantum of fluid.

Additionally in accordance with an embodiment of the invention, the membrane further defines a pair of edges lying in respective planes substantially parallel to the direction of fluid flow and the fluid flow path has a uniform cross-sectional configuration along at least a part of its length, the fluid impermeable seals being defined therealong.

Further in accordance with an embodiment of the invention, the part of the flow path length having a uniform cross-sectional configuration has a rectangular cross-sectional configuration and is defined by first and second pairs of parallel walls, the membrane being disposed therebetween such that the respective planes in which the membrane edges lie are aligned substantially parallel to the first pair of walls.

Additionally in accordance with an embodiment of the invention, the fluid impermeable seals are defined at at least three locations along the flow path.

Further in accordance with an embodiment of the invention, the membrane edges are spaced from the first pair of walls by substantially a fluid boundary layer thickness.

Additionally in accordance with an embodiment of the invention, the membrane has a rectangular configuration and is oriented such that its longitudinal axis lies parallel to the direction of flow.

Additionally in accordance with an embodiment of the invention, the housing is configured to permit deposition of debris from the fluid at a location upstream of the membrane but downstream of an adjacent fluid port.

Further in accordance with an embodiment of the invention, the membrane comprises a layer of piezoelectric material.

According to an alternative embodiment of the invention, the means for generating electrical signals comprises first and second electrical contacts mounted, respectively, onto a surface of the membrane and in association with the monitoring means such that an electrical signal is generated upon release of a single quantum of fluid.

According to a further alternative embodiment of the invention, the flexible membrane comprises magnetized material and the means for generating electrical signals comprises a magnetic head operative to generate an electrical signal upon sensing proximity of the membrane thereto.

Additionally in accordance with an embodiment of the invention, the monitoring means includes apparatus for identifying electrical signals generated by flexure of the membrane upon release therefrom of a single quantum of fluid.

Further in accordance with an embodiment of the invention, the monitoring means also includes apparatus for determining the rate of fluid flow based upon electrical signals received over a measured period of time.

Additionally in accordance with an embodiment of the invention, the monitoring means also comprises apparatus for storing a predetermined value of volume for a single quantum of fluid flow, apparatus for calculating a fluid flow rate corresponding to a number of electrical signals received over a measured period of time, apparatus for comparing the predetermined value for the single quantum with a value of volume corresponding to the flow delivery characteristics of the. flow meter at the first rate of flow, apparatus for adjusting the predetermined value to the value of volume corresponding to the flow delivery characteristics and apparatus for repeatedly adjusting the predetermined value of volume of a single quantum of fluid so as to obtain an increasingly more accurate value of flow.

In accordance with an alternative embodiment of the invention, the fluid flow path has an arched configuration along its length.

### BRIEF DESCRIPTION OF THE DRAWINGS

The present invention will be understood and appreciated more fully from the following detailed description taken in conjunction with the drawings, in which:
Fig. 1 is a perspective illustration of a quantum fluid flow meter, constructed according to an embodiment of the invention;
Fig. 2 is a sectional view of the flow meter of Fig. 1, taken along line II-II therein;
Fig. 3 is a cross-section taken along line III-III in Fig. 2;
Fig. 4 is a cross-section taken along line IV-IV in Fig. 3;
Fig. 5 shows an enlarged detail of a portion of the cross-section shown in Fig. 4;
Fig. 6 shows an enlarged detail of a portion of the cross-section shown in Fig. 4, constructed according to an alternative embodiment of the invention;
Fig. 7 is a sectional. illustration of a portion of a piezoelectric member useful in the flow meter of Fig. 1;
Fig. 8 is an enlarged cross-sectional view taken along line XIII-XIII in Fig. 3;
Fig. 9 is a view similar to that of Fig. 8, but showing a construction according to an alternative embodiment of the invention;
Fig. 10 is a view similar to that of Fig. 8, but showing a construction according to a further embodiment of the invention;
Fig. 11 shows a piezoelectric member similar to that shown in Fig. 7 but wherein the ends thereof are thickened;
Fig. 12 is a cross-sectional partial view of spring mounts for guide blocks shown in Fig. 8 to 10;
Fig. 13 is an elevational view of an end portion of the piezoelectric member shown in Fig. 3 and showing mounting details thereof;
Fig. 14 is a cut away illustration of a portion of a side wall of the housing of the flow meter shown in Fig. 1;
Figs. 15A, 15B and 15C show three successive stages in the transport of discrete fluid quanta across the flow meter of Fig. 1;
Fig. 16 is a schematic illustration of a fluid flow meter similar to that shown in Fig. 1, but having arched walls;
Fig. 17 is a block diagram illustration of electronic apparatus associated with a fluid flow meter of the present invention;
Fig. 18 is a block diagram illustration showing a telemetering system, useful in conjunction with a fluid flow meter of the present invention;
Fig. 19 is a block diagram illustration showing an alternative telemetering system, useful in conjunction with a fluid flow meter of the present invention;
Fig. 20 is a block diagram illustration showing a further alternative telemetering system, useful in conjunction with a fluid flow meter of the present invention;
Fig. 21 shows a multiplexed telemetering system, useful in conjunction with a fluid flow meter of the present invention;
Fig. 22 shows a partial side-section of a fluid flow meter, constructed and operative with an alternative embodiment of the invention;
Fig. 23 shows a partial side-section of a fluid flow meter, constructed and operative with a further alternative embodiment of the invention; and
Fig. 24 is a top view of a piezoelectric member, constructed and operative in accordance with an alternative embodiment of the invention.

### DETAILED DESCRIPTION OF THE INVENTION

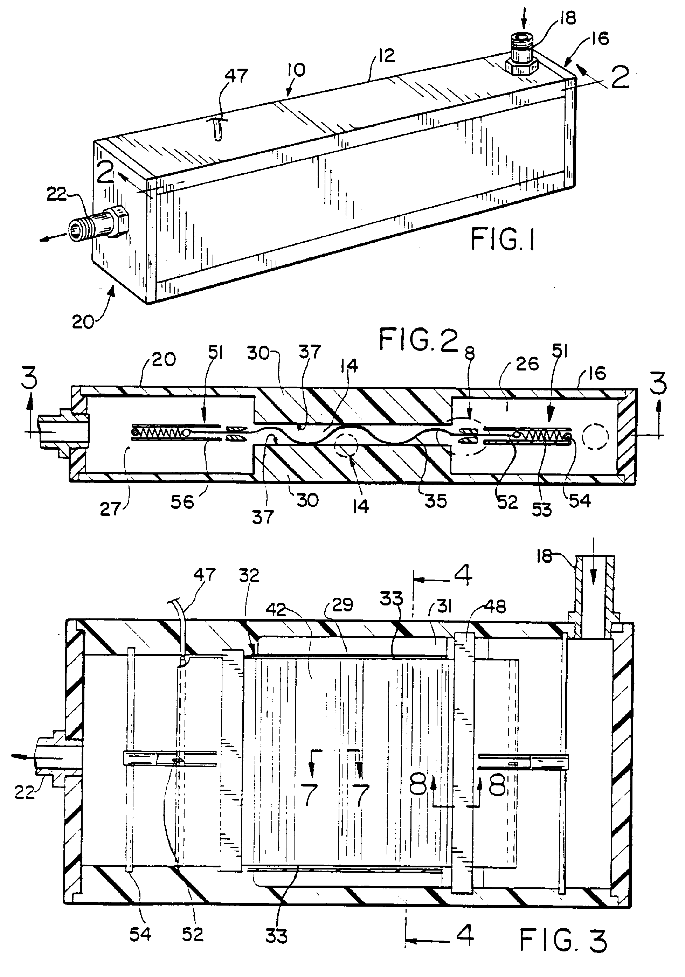

Referring to Figs. 1, 2 and 3, there is shown a positive displacement fluid flow meter, referenced generally 10, having a housing 12 defining a fluid flow chamber 14 (Fig. 2) and first and second ends 16 and 20, having respective first and second fluid ports 18 and 22.

Although in the shown embodiment, fluid ports 18 and 22 function respectively as an inlet and outlet, it will be appreciated from the ensuing description that the internal arrangement of the flow meter 10 is such that fluid flow may take place in any chosen direction and with the flow meter at any preferred orientation.

According to a preferred embodiment of the invention, flow meter 10 is used for metering the flow of compressible fluids, such as gas. As, however, as the flow meter of the present invention may also be used for the metering of noncompressible fluids such as oil or water, the flow of "fluid" is described herein throughout except where not applicable.

According to the shown embodiment, housing 12 includes a first end receiving chamber 26 for receiving fluid flow from inlet 18 prior to the fluid passing through flow chamber 14. Chamber 26 permits any debris and, in the case of gas flow, moisture, to be deposited therein prior to the flow through flow chamber 14. There is also provided a second end chamber 27, similar to first end chamber 26, for receiving therein any deposition of debris and moisture in a case of flow in a direction opposite to that indicated.

According to the present invention, discrete quanta of fluid, each having known volume, are permitted to pass across a membrane 35 and volumetric flow may be determined according to the number of such quanta passing across the membrane. This is described in greater detail below. Although membrane 35 is positioned such that in a non-flow situation edges 33 thereof are very close to sidewalls 29, typically in the order of magnitude of several scores of microns, such that leakage of any fluid therepast is prevented, it is preferable in a flow situation, that the gap between the membrane edges and the sidewalls be reduced.

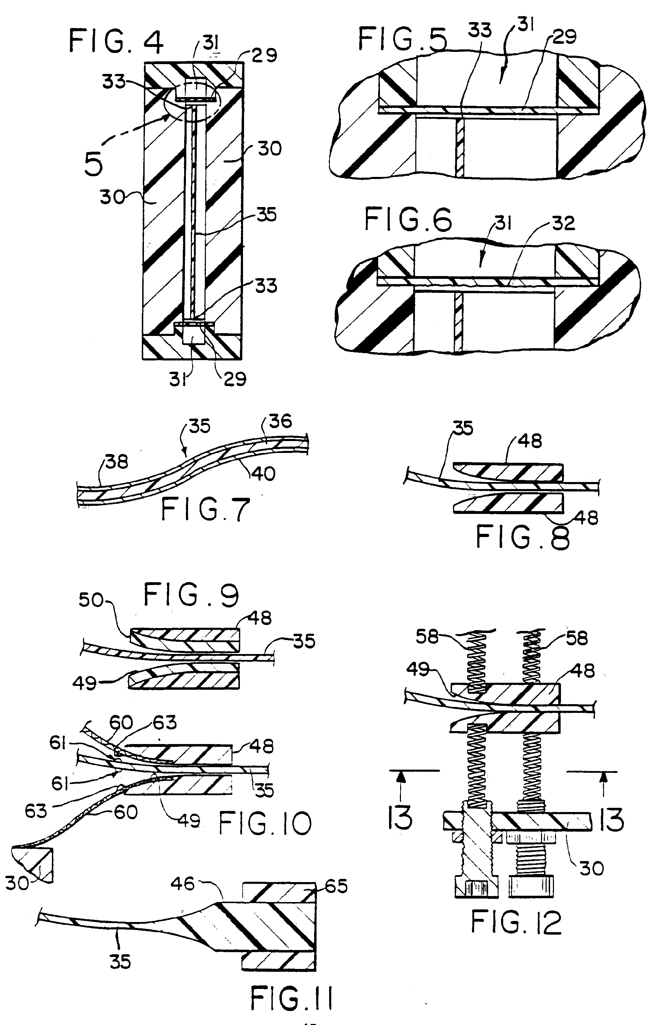

With reference additionally to Figs. 4 and 5, flow chamber 14 is, therefore, provided with a pair of preferably rigid first sidewalls 30 and a pair of non-rigid second sidewalls 29 fabricated of flexible elastomer, such as rubber. As fluid passes across membrane 35, pressure inside flow chamber 14 drops and the flexible, second sidewalls 29 tend, therefore, to move slightly inwards so as to reduce the gap between edges 33 of the membrane and sidewalls 29 to a fluid boundary layer thickness. Due to the high resistance to flow along the gap, leakage is, therefore, substantially prevented. The inward movement of sidewalls 29 is further facilitated by spaces 31 provided adjacent to edges 33 of membrane 35.

Referring briefly to Fig. 6, it has been found that when second sidewalls are not made from a flexible material, fluid leakage may be substantially prevented by providing them with a roughened surface 32 (also shown in Fig. 3).

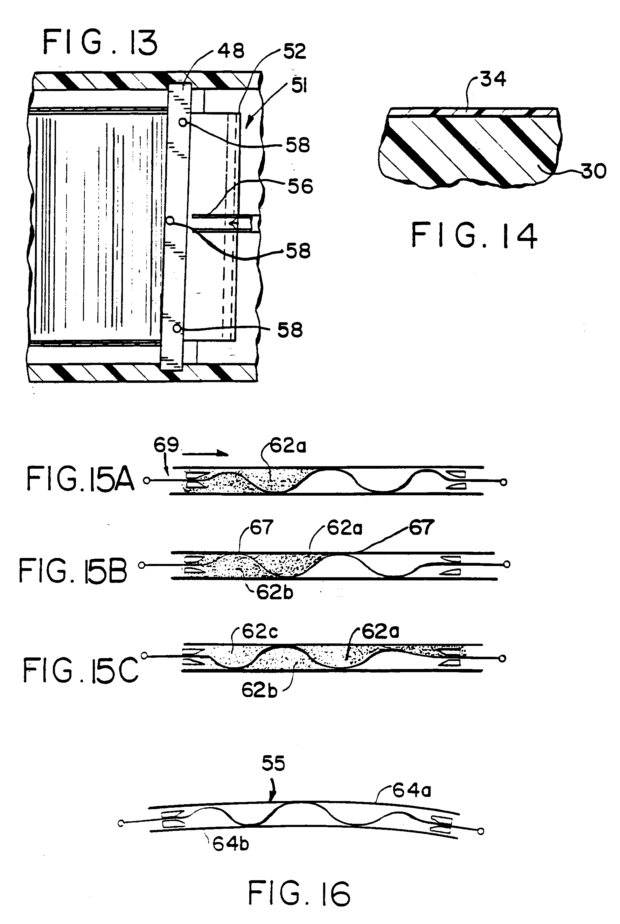

With particular reference to Figs. 2 and 14, sidewalls 30 are preferably coated with a thin layer 34 of an antistatic and hydrophobic material such as carbonated polyethylene. Layer 34 prevents the build-up of static electricity in the flow chamber and condensation of moisture on the sidewalls which might otherwise interfere with the flexing of membrane 35. As will be appreciated from the description below, the unimpeded flexing action of membrane 35 is important to maintain. According to an alternative embodiment of the invention, the sidewalls may be made entirely from an antistatic and hydrophobic material.

With particular reference to Fig. 7, there is shown a cross-section of a portion of membrane 35. According to the shown embodiment, membrane 35 is piezoelectric and comprises a thin layer 36 of piezoelectric material, such as polyvinylidene fluoride and metallized surrounding layers, referenced 38 and 40.

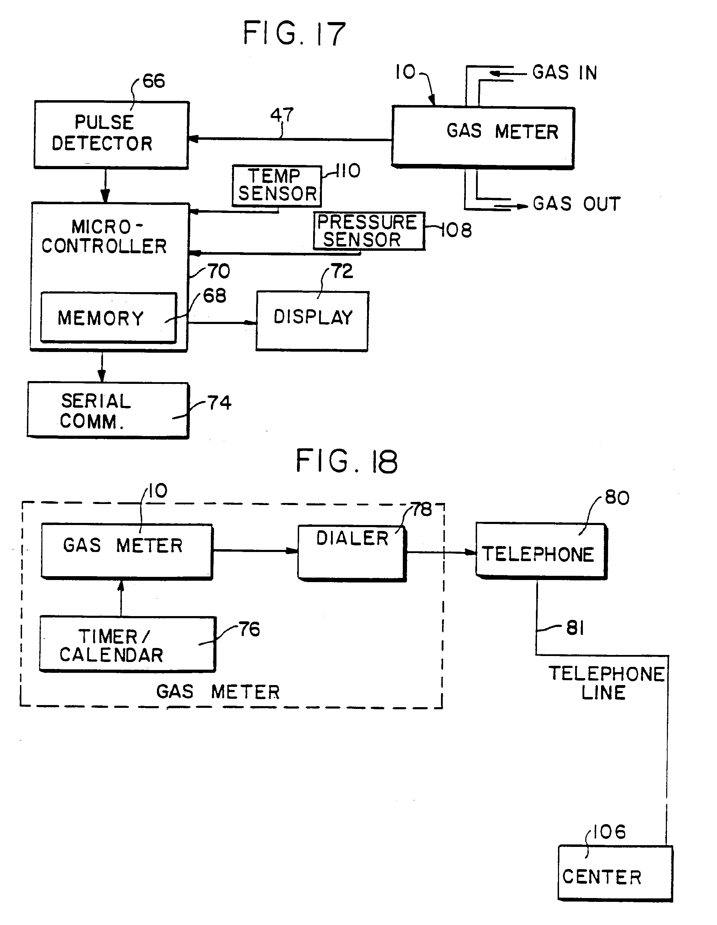

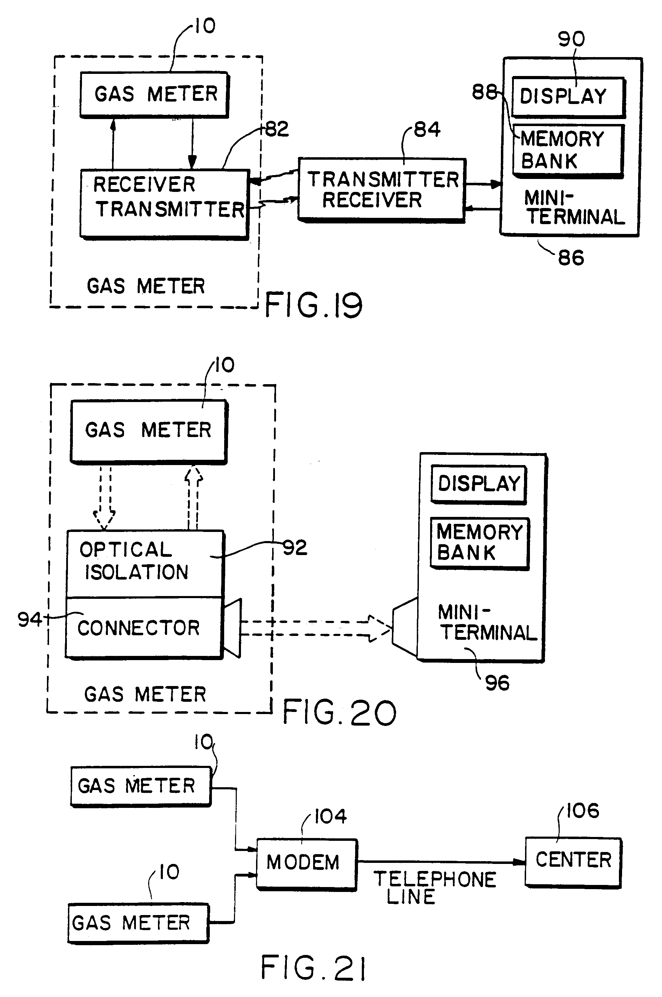

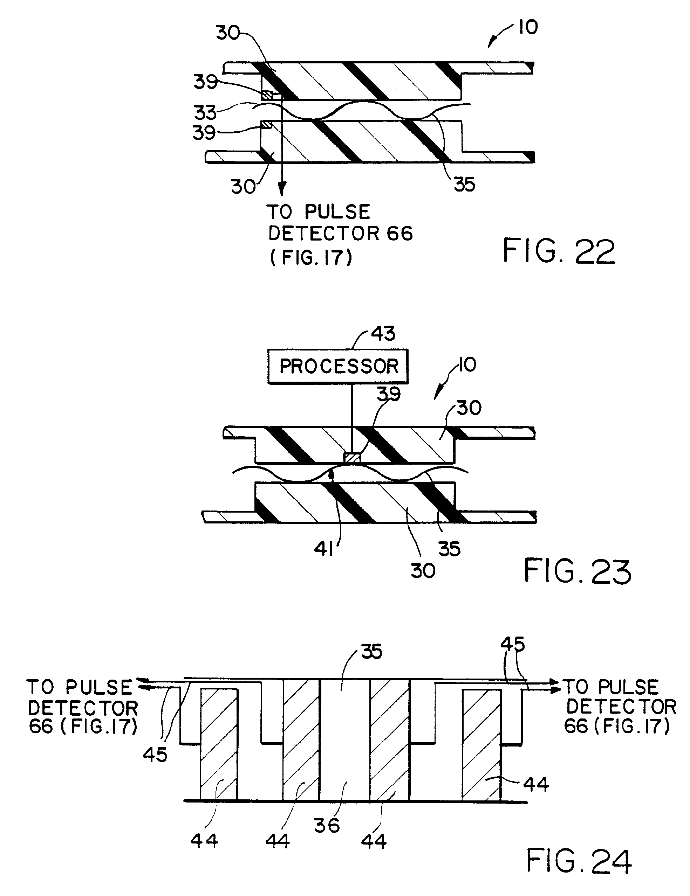

According to the embodiment shown in Fig. 24, membrane 35 is piezoelectric but, as distinct from the embodiment shown in Fig. 7, the layer 36 of piezoelectric material is overlaid, on either or both faces thereof, by discrete metallized strips 44, each having electrical connections 45 to a pulse detector unit 66 (Fig. 17). As the membrane flexes, as shown and described below in conjunction with Figs. 15A to 15C, it is thus possible to determine the speed of wave propagation along the flow chamber which can be used by microcontroller 70 (Fig. 17) to further "correct" the calculated volume of each quantum of fluid.

According to a preferred embodiment of the invention, membrane 35 has. a substantially vertical position within-flow chamber 14. This avoids possible unsymmetrical functioning of the membrane due to the effects of gravity.

As shown in Fig. 2, membrane 35 is preferably longer than the length of flow chamber 14 in which it is positioned. This ensures that membrane 35 takes up a wavelike position and that flat sides of 42 of the membrane are in constant engagement with-sidewalls 30 of the flow chamber, preferably, at at least three locations.

Referring now to Figs. 2 and 13, it is seen that membrane 35 is, according to a preferred embodiment, secured at ends 51 thereof about rods 52. Each rod 52 is in turn secured to a fixed rod 54 by means of a spring 53 contained within a housing 56. This type of mounting, it will be appreciated, permits limited longitudinal movement of the membrane within flow chamber 14.

Referring now to Figs. 2 and 8, rounded guide blocks 48 are provided so as to induce instability of membrane 35, it being noted that as each quantum of fluid passes thereacross, a very rapid change of position by flexure of membrane 35 is required. Provision of the guide blocks is an important feature as they assist in switching of the membrane from one position to another under a very low input of kinetic energy, such as occurs in gas flows. The range of positions taken up by membrane 35 upon flexure are described below in detail with reference to Figs. 15A to 15C.

Referring briefly to Fig. 9, there is shown an alternative embodiment of guide blocks 48 in which each of the guide blocks also has an additional layer of rubber.

With reference to Fig. 10, there are provided fluid permeable guide extensions 60 that are attached to guide blocks 48 and constitute extensions of curved surfaces 49 thereof. Referring additionally to Figs. 15A to 15C, it is seen that although membrane 35 generally does not move along the length of the flow chamber, as the discrete quanta of fluid pass through the flow meter, causing the membrane to undulate, points of contact between the membrane and the flow chamber walls "travel" in the direction of fluid flow, the membrane moving by flexure from a first position just prior to release of a quantum of fluid, to a second position just after release of the quantum.

Guide extensions are made, for example, from wire mesh. While not interfering, therefore, with the fluid flow, they have configurations similar to the membrane in either of its two respective positions taken up just before and after release of a quantum of fluid. As the points of contact between the membrane and the chamber walls, which are coincident with the maximum points of curvature of the membrane, move along the flow chamber towards an end thereof, they leave side walls 30 and mount guide extensions 60. Extensions 60 induce a degree of instability that causes, under a relatively low kinetic energy input, a relatively fast change of position of the membrane between the positions taken up thereby just before and after release of a quantum of fluid.

Although, as stated, membrane 35 generally does not move along flow chamber 14, a certain amount of relative motion does occur between the membrane and sidewalls 30 of the flow chamber. It is, therefore, important that inward-facing surfaces 37 of sidewalls 30 are very smooth.

According to one embodiment of the invention, as stated, membrane 35 is made from piezoelectric material. According to an alternative embodiment, however, as shown in Fig. 10, membrane 35 is not made from a piezoelectric material but instead has mounted on it a pair of electrical contacts 61, each which is alternately brought into contact with a corresponding one of a pair of electrical contacts 63 mounted onto guide extensions 60.

It will be appreciated that as each quantum of fluid passes through flow chamber 14 and as membrane 35 switches from one position to the other, an electrical pulse is generated by contact of one of contacts 61 with a corresponding contact 63.

This embodiment has a particular advantage over a piezoelectric membrane as a discrete pulse is generated each time membrane 35 moves so as to release a quantum of fluid. When a piezoelectric membrane is used, however, every movement thereof generates electrical signals, a change in position of the membrane being indicated simply by an increase in intensity of the signals.

According to an alternative embodiment of the invention only a single one of each of electrical contacts 61 and 63 is provided, a single pulse thus being generated as every alternate quantum of fluid is passed. It will also be appreciated that contacts 61 and 63 may be incorporated into other embodiments of the invention, such as those illustrated in Figs. 8 and 9. In yet a further alternative embodiment of the invention, electrical contacts 63 may be provided independently of guide blocks 48.

Referring now to Fig. 22, there is shown an alternative embodiment of the invention in which membrane 35 comprises a magnetic tape. Incorporated into sidewalls 30 are, preferably, a pair of magnetic heads 39. As the points of contact between the membrane and sidewalls 30 travel along the flow chamber, typically just as a quantum of fluid is released, a point of contact of membrane 35 with one of the sidewalls moves across an adjacent head 39, thereby generating an electrical pulse. According to the shown embodiment a signal is generated as every quantum of fluid is released while, according to an alternative embodiment, a single magnetic head may be provided so as to indicate release of alternate quanta of fluid.

Referring now to Fig. 23, in the shown embodiment, as with the embodiment of Fig. 22, membrane 35 comprises a magnetic tape. According to the shown embodiment, however, magnetic head 39 is embedded into second sidewall 30 of the flow chamber, and is operative to engage a face 41 of membrane 35 as it passes in contact therewith.

According to the shown embodiment, the membrane includes a plurality of magnetic bands provided thereon at a known frequency, such as 5 Khz. As face 41 passes in contact with head 39, processing apparatus 43 associated therewith is operative to sense not only passage of a portion of the membrane across the head, but it is also operative to sense the frequency at which the magnetic bands pass, and thus to determine the speed at which the fluid is passing.

Referring to Fig. 11, membrane 35 is shown with thickened ends 46 which may also include additional layers 65 of piezoelectric material. The thickened end and the additional layers of material serve to reduce the possibility of failure of the membrane due to fatigue stresses. According to an alternative embodiment, membrane 35 may have different cross-sectional thickness along the entire length thereof or along selected portions thereof.

As shown in Figs. 12 and 13, guide blocks 48 are not rigidly positioned but are preferably secured by springs 58 to sidewalls 30 of the flow chamber.

Reference is now made to Figs. 15A to 15C, in which there are shown successive stages of fluid flow through the flow meter of the invention. Initially, a first quantum of fluid passes into the flow chamber and exerts a force on the membrane until it is forced to change position. At this stage, the first quantum, referenced 62a, becomes entrapped between the wall of the flow chamber, the membrane and two points of contact, referenced 67, between the membrane and the flow chamber wall.

As the point of contact nearest an inlet 69 is being established, a second quantum of fluid, referenced 62b, enters the chamber and also exerts a force on the membrane, travelling downstream until eventually it too becomes entrapped.

A third quantum of fluid, referenced 62c, enters the flow chamber and also exerts a force on the membrane. The points of contact continue to travel downstream until the membrane moves by flexure from one position to another, thereby releasing the first quantum of fluid and generating an electrical pulse.

It has been found that when the membrane is in touching engagement with the flow chamber walls at at least three locations, possible distortion of the membrane and consequent blockage of the flow chamber, such as might otherwise result from a high rate of flow, is prevented.

Referring to Fig. 16, there is shown a flow chamber constructed in accordance with an alternative embodiment of the invention. The flow chamber, referenced 55, comprises a pair of curved walls 64a and 64b. The curvature of chamber 55 results in instability in the positions taken up by the membrane, which, as described above, is desirable. Although quanta of fluid flowing alongside the outer wall 64a will be larger than those flowing alongside the outer wall 64b, the quantity of flow can be determined by taking an average of the two different-sized quanta.

Referring now to Figs. 3 and 17, there is shown an electrical connection 47 to a metallized layer of piezoelectric membrane 35 for carrying to a pulse detector unit 66 (Fig. 17) electrical signals generated by movement of the membrane. According to an embodiment of the invention wherein membrane 35 is not piezoelectric but electrical contacts are used instead, electrical connection 47 is connected to the electrical contacts.

When a piezoelectric membrane is used, the pulse detector unit preferably includes signal processing electronic circuitry that is operative to recognize a particular shape of a pulse or an electrical signal corresponding to flexure of the membrane at the time of release of a quantum of fluid from outlet 22 of the fluid flow meter. It will be appreciated that it is important to be able to distinguish such pulses from background signals that are constantly being generated by the membrane.

A value for the volume of each quantum of fluid is either preset or predetermined and stored in a memory 68 of a microprocessor 70, such that each signal received represents the flow of a reference volume of fluid through the flow meter. The microprocessor preferably also has a display 72 and a serial communication port 74.

According to a preferred embodiment of the invention, by using the preset value for each quantum and according to electrical signals received, the micrpprocesser is operative to calculate the flow rate. By using flow delivery data, as are typically contained in a look-up table and by comparing the preset quantum value with a quantum value in the table corresponding the calculated flow rate, the microprocessor is operative to alter the preset quantum value to a different value. By repeating these steps of calculating and comparing, in iterative fashion, the microprocessor is operative to reach a "true" quantum value and, hence, a true flow value.

Also, according to a preferred embodiment of the invention, pressure and temperature sensors, respectively referenced 108 and 110 (Fig. 17), are mounted in the flow chamber and are effective to continuously provide to the microprocessor pressure and temperature readings. The microprocessor also calculates any necessary adjustment of the preset value for the volume of each quantity of fluid, according to the pressure and temperature data received.

The pressure and temperature readings may also be used by microcontroller 70 to provide an alarm indication when the temperature rises to a dangerously high level, which may indicate fire or where the pressure drops below a predetermined threshold value, which may serve as an indication of leakage in the system.

According to an alternative embodiment of the invention, multiple flow meters may be provided to accommodate a very large fluid flow, with the flow pulse signal being directed to a central microcontroller for determination of the overall fluid flow rate.

Reference is now made to Fig. 18, wherein there is shown, in block diagram form, centralized data collection apparatus utilizing the flow meter of the present invention. In accordance with a preferred embodiment of the invention, a dialer 78, which permits communication between the flow meter and a domestic telephone line 81, is operative to automatically dial a data center 106 and to send thereto information pertaining to fluid flow as measured by the meter.

A timer 76 may also be provided to trigger dialer 78 at a given interval, such as once a month and preferably at a time when the telephone line is unlikely to be in use. The dialer is also preferably operative to continue dialing from the time it is triggered by timer 76, until it manages to get through to data center 106 and pass the required information. In the event that the connection is broken while the information is being passed, dialer 78 is operative to redial, if necessary repeatedly, until the information is successfully passed.

Referring now to Fig. 19, communication between the flow meter and a mini-terminal 86 may be provided by means of a first receiver-transmitter 82 linked to the flow meter and a second receiver-transmitter 84 associated with the mini-terminal. The mini-terminal may also be equipped with a memory bank 88 and a display panel 90. Local networks of an optically-isolated unit 92 may be provided through a connector 94 to a mini-terminal 96, as shown in Fig. 20.

Referring to Fig. 21, fluid meters 10, which, according to a preferred embodiment are gas flow meters, may be connected with a remote data center 106 by means of a modem 104. This permits not only regular sending of flow information from the gas meters to the data center, but it also permits data center initiated scanning of the gas meters.

It will be appreciated by persons skilled in the art that the present invention is not limited to what has been shown and described hereinabove. The scope of the invention is, rather, limited solely by the claims, which follow:

## Claims

1. A fluid flow meter (10) comprising a housing (12) having an inlet and an outlet fluid port (18,22) and defining a fluid flow path (14) therebetween; a flexible membrane (35) defining a pair of opposing faces and being mounted by opposed first and second ends (51) in said fluid flow path such that said pair of opposing faces simultaneously define with said housing (12) fluid impermeable seals at at least two different locations along said flow path (14), said membrane (35) being operative to flex so as to permit passage therepast of discrete quanta of fluid, each having a known volume; means for generating electrical signals corresponding to flexure of said membrane (35); and monitoring means (70) for receiving the electrical signals and thereby determining a fluid flow rate along said flow path (14), characterized in that said first end (51) of the membrane (35) is mounted downstream of the inlet fluid port (18) and guide apparatus (48,60) for guiding the membrane (35) is mounted within the housing (12) adjacent at least said first end (51) to abut the membrane (35) in either of two respective positions taken up just before and after release of a quantum of fluid.

2. A fluid flow meter (10) in accordance with Claim 1, wherein said guide apparatus (48,60) comprises a guide extension (60).

3. A fluid flow meter (10) in accordance with Claim 2, wherein said guide extension (60) is permeable.

4. A fluid flow meter (10) in accordance with Claim 2 or Claim 3, wherein said membrane (35) is provided with an electrical contact (61) for contacting a corresponding electrical contact (63) mounted on said guide extension (60).

5. A fluid flow meter (10) in accordance with any of Claims 1 to 4, wherein said guide apparatus (48,60) comprises a guide member (48).

6. A fluid flow meter (10) in accordance with any preceding claim, wherein said flexible membrane (35) comprises a layer of piezoelectric material (36).

7. A fluid flow meter (10) in accordance with Claim 6, wherein said flexible membrane (35) additionally comprises a pair of metallised layers (38,40) surrounding said layer of piezoelectric material (36).

8. A fluid flow meter (10) in accordance with Claim 7, wherein said metallised layers (38,40) comprise discrete metallised strips (44) overlayed on either or both faces of said piezoelectric material (36).

9. A fluid flow meter (10) in accordance with any of Claims 6 to 8, wherein said piezoelectric material is polyvinylidene fluoride.

10. A fluid flow meter (10) in accordance with any preceding claim, wherein the flexible membrane (35) has a different cross-sectional thickness along selected portions of its length so as to reduce the possibility of failure of the membrane (35) due to fatigue stresses.

11. A fluid flow meter (10) in accordance with Claim 10, wherein said flexible membrane (35) is provided with ends (46) of thickened cross-section.

12. A fluid flow meter (10) in accordance with any preceding claim, wherein said housing (12) includes a first end receiving chamber (26) for receiving fluid flow from said inlet fluid port (18) prior to the fluid passing through said fluid flow path (14), said chamber (26) permitting debris from said fluid to be deposited therein prior to flowing through said fluid flow path (14).

13. A fluid flow meter (10) in accordance with any preceding claim, wherein said flexible membrane (35) further defines a pair of edges (33) lying in respective planes substantially parallel to the direction of fluid flow and said fluid flow path (14) has a uniform cross-sectional configuration along at least part of its length, said fluid impermeable seals being defined therealong.

14. A fluid flow meter (10) in accordance with Claim 13, wherein said part of said fluid flow path length having a uniform cross-sectional configuration has a rectangular cross-sectional configuration and is defined by first and second pairs of parallel walls (30,29), said membrane (35) being disposed therebetween such that said respective planes in which said membrane edges (33) lie are aligned substantially parallel to said first pair of walls (30).

15. A fluid flow meter (10) in accordance with Claim 14, wherein said second pair of parallel walls (29) are non rigid.

16. A fluid flow meter (10) in accordance with Claim 15, wherein said second pair of parallel walls (29) are fabricated of a flexible elastomer.

17. A fluid flow meter (10) in accordance with any of Claims 14 to 16, wherein said fluid impermeable seals are defined at at least three locations along said fluid flow path (14).

18. A fluid flow meter (10) in accordance with Claim 17, wherein said membrane edges (33) are spaced from said first pair of walls (30) by substantially a fluid boundary layer thickness.

19. A fluid flow meter (10) in accordance with any of Claims 14 to 18, wherein said flexible membrane (35) has a rectangular configuration and is orientated such that its longitudinal axis lies parrallel to the direction of flow.

20. A fluid flow meter (10) in accordance with any of Claims 14 to 19, wherein said first and second ends (51) of said flexible membrane (35) are mounted for partial rotation about respective first and second axes which extend parallel to said second pair of walls (29) and pass through said first pair of walls (30).

21. A fluid flow meter (10) in accordance with any of Claims 14 to 20, wherein said first pair of walls (30) define an inward facing surface having anti-static and hydrophobic properties.

22. A fluid flow meter (10) in accordance with any preceding claim, wherein the monitoring means (70) receives electrical signals over a measured period of time, determining the rate of said electrical signals, determining the volume of said quanta based upon said electrical signal rate, and thereby determining a fluid flow rate along said flow path (14).

23. A fluid flow meter (10) in accordance with any preceding claim, and further comprising a temperature sensor (110) for sensing the temperature of said fluid.

24. A fluid flow meter (10) in accordance with Claim 23, wherein the readings generated by said temperature sensor (110) are used to provide an alarm indication when the temperature of said fluid rises above a predetermined level.

25. A fluid flow meter (10) in accordance with any preceding claim, and further comprising a pressure sensor (108) for sensing the pressure of said fluid.

26. A fluid flow meter (10) in accordance with Claim 25, wherein the readings generated by said pressure sensor (108) are used to provide an alarm indication when the pressure of said fluid drops below a predetermined threshold value.

27. A fluid flow meter (10) in accordance with any preceding claim, and further comprising both a pressure sensor (108) and a temperature sensor (110), a preset value of the volume of each quantum of fluid being adjusted according to the pressure and temperature data received therefrom.

28. A fluid flow meter (10) in accordance with any preceding claim, and further comprising a centralised data collection apparatus with which the fluid meter (10) is permitted to communicate information pertaining to fluid flow as measured by said fluid meter (10).

29. A fluid flow meter (10) in accordance with Claim 28, wherein the fluid flow meter (10) is permitted to communicate with said centrallised data collection apparatus (106) by means of a dialler (78) and a telephone line (81), the dialler (78) being operative to automatically dial said centrallised data collection apparatus (106) and to send said information thereto.

30. A fluid flow meter (10) in accordance with any preceding claim, wherein preset values of the volume of each quantum of fluid at different flow rates are contained within a look-up table.

31. A fluid flow meter (10) in accordance with any preceding claim, wherein a preset value of a quantum of fluid is compared with a quantum value corresponding to the calculated flow rate, said preset value being altered to a different value in response to said comparison such that by repeating the steps of calculating and comparing said values in an iterative fashion said preset value is altered to a "true" quantum value.

32. A fluid flow meter (10) in accordance with any preceding claim, wherein the monitoring apparatus (70) comprises apparatus (68) for storing a predetermined value of volume for a single quantum of fluid flow, apparatus (70) for calculating a fluid flow rate corresponding to a number of electrical signals received over a measured period of time, apparatus (70) for comparing the predetermined value for the single quantum with a value of volume corresponding to the flow delivery characteristics of the flow meter (10) at the first rate of flow, apparatus (70) for adjusting the predetermined value to the value of volume corresponding to the flow delivery characteristics, and apparatus (70) for repeatedly adjusting the predetermined value of volume of a single quantum of fluid so as to obtain an increasingly more accurate value of flow.

## Patentansprüche

1. Fluid-Durchflußmesser (10) mit einem Gehäuse (12) mit einer Fluideingangs- und Fluidausgangs-Öffnung (18, 22) und einem dazwischen definierten Fluidstromungsweg (14); einer flexiblen Membran (35), die ein Paar einander gegenüberliegende Seiten definiert und die mittels einander gegenüberliegenden ersten und zweiten Enden (51) in dem Fluidströmungsweg so montiert ist, daß das Paar einander gegenüberliegender Seiten zusammen mit dem Gehäuse (12) fluiddichte Dichtungen an wenigstens zwei unterschiedlichen Stellen entlang des Strömungsweges (14) bildet, wobei die Membran (35) so gebogen werden kann, daß sie einen Durchlaß von diskreten Quantenfluid an ihr vorbei erlaubt, die jeweils ein bekanntes Volumen haben; Mitteln zum Erzeugen von elektrischen Signalen entsprechend der Biegung der Membran (35); und eine Überwachungseinrichtung (70) zum Empfangen der elektrischen Signale und dadurch zum Bestimmen einer Fluidströmungsgeschwindigkeit entlang des Strömungsweges (14);
dadurch **gekennzeichnet**, daß das erste Ende (51) der Membran (35) stromab der Fluideingangsöffnung (18) montiert ist, und ein Führungsapparat (48, 60) zum Führen der Membran (35) innerhalb des Gehäuses (12) in der Nähe von wenigstens dem ersten Ende (51) montiert ist, um an der Membran (35) in einer der zwei jeweiligen Positionen anzuliegen, die jeweils vor und nach dem Freilassen eines Quantums Fluid eingenommen werden.

2. Fluid-Durchflußmesser (10) nach Anspruch 1,
dadurch **gekennzeichnet**, daß der Führungsapparat (48, 60) eine Führungsverlängerung (60) aufweist.

3. Fluid-Durchflußmesser (10) nach Anspruch 2,
wobei die Führungsverlängerung (60) durchlässig ist.

4. Fluid-Durchflußmesser (10) nach Anspruch 2 oder 3,
wobei die Membran (35) mit einem elektrischen Kontakt (61) versehen ist, um einen entsprechenden elektrischen Kontakt (63), der an der Führungsverlängerung (60) montiert ist, zu kontaktieren.

5. Fluid-Durchflußmesser (10) nach einem der Ansprüche 1 bis 4,
wobei der Führungsapparat (48, 60) ein Führungselement (48) aufweist.

6. Fluid-Durchflußmesser (10) nach einem der vorstehenden Ansprüche,
wobei die flexible Membran (35) eine Schicht aus piezoelektrischem Material (46) aufweist.

7. Fluid-Durchflußmesser (10) nach Anspruch 6,
wobei die flexible Membran (35) zusätzlich ein Paar metallisierte Schichten (38, 40) aufweist, die das piezoelektrische Material (36) umgeben.

8. Fluid-Durchflußmesser (10) nach Anspruch 7,
wobei die metallisierten Schichten (38, 40) diskrete Metallstreifen (44) aufweisen, die auf einer oder beiden Seiten des piezoelektrischen Materials (36) aufgelegt sind.

9. Fluid-Durchflußmesser (10) nach einem der Ansprüche 6 bis 8,
wobei das piezoelektrische Material Polyvinylidenfluorid ist.

10. Fluid-Durchflußmesser (10) nach einem der vorstehenden Ansprüche,
wobei die flexible Membran (35) entlang ausgewählter Abschnitte ihrer Länge einen unterschiedlich dicken Querschnitt hat, um die Möglichkeit des Versagens der Membran infolge von Ermüdungbeanspruchungen zu verringern.

11. Fluid-Durchflußmesser (10) nach Anspruch 10,
wobei die flexible Membran (35) an ihren Enden (46) jeweils mit einer Querschnittverdickung versehen ist.

12. Fluid-Durchflußmesser (10) nach einem der vorstehenden Ansprüche,
wobei das Gehäuse (12) eine erste Endaufnahmekammer (26) zum Aufnehmen des Fluidstroms aus der Fluideingangsöffnung (18) vor dem Fluiddurchgang durch den Fluidströmungsweg (14) aufweist, wobei die Kammer (26) ermöglicht, daß in ihr Überbleibsel aus dem Fluid abgeschieden werden, bevor dieses durch den Fluidströmungsweg (14) fließt.

13. Fluid-Durchflußmesser (10) nach einem der vorstehenden Ansprüche,
wobei die flexible Membran (35) weiterhin ein Paar Kanten (33) definiert, die in entsprechenden Ebenen im wesentlichen parallel zur Fluidströmungsrichtung liegen, und daß der Fluidströmungsweg (14) entlang wenigstens eines Teils seiner Länge eine gleichförmige Querschnittsform aufweist, wobei die fluidundurchlässigen Dichtungen entlang desselben vorgesehen sind.

14. Fluid-Durchflußmesser (10) nach Anspruch 13,
wobei ein Teil der Länge des Fluidströmungsweges, der eine gleichförmige Querschnittsform hat, eine rechteckige Querschnittsform hat und durch ein erstes und ein zweites Paar paralleler Wände (30, 29) begrenzt ist, wobei die Membran (35) zwischen diesen so angeordnet ist, daß die jeweiligen Ebenen, in welchen die Membrankanten (33) liegen, im wesentlichen parallel zu dem ersten Paar Wände (30) ausgerichtet sind.

15. Fluid-Durchflußmesser (10) nach Anspruch 14,
wobei das zweite Paar paralleler Wände (29) nicht starr ist.

16. Fluid-Durchflußmesser (10) nach Anspruch 15,
wobei das zweite Paar paralleler Wände (29) aus einem flexiblen Elastomer hergestellt ist.

17. Fluid-Durchflußmesser (10) nach einem der Ansprüche 14 bis 16,
wobei die fluidundurchlässigen Dichtungen an wenigstens drei Stellen entlang des Fluidströmungswegs (14) definiert sind.

18. Fluid-Durchflußmesser (10) nach Anspruch 17,
wobei die Membrankanten (33) von dem ersten Paar Wände (30) einen Abstand aufweisen, der im wesentlichen gleich einer Fluid-Grenzschichtdicke ist.

19. Fluid-Durchflußmesser (10) nach einem der Ansprüche 14 bis 18,
wobei die flexiblbe Membran (35) eine rechteckige Form hat und so ausgerichtet ist, daß ihre Längsachse parallel zur Strömungsrichtung liegt.

20. Fluid-Durchflußmesser (10) nach einem der Ansprüche 14 bis 19,
wobei die ersten und zweiten Enden (51) der flexiblen Membran (35) so montiert sind, daß sie um jeweilige erste und zweite Achsen, die sich parallel zu dem zweiten Paar Wände (29) erstrecken und durch das erste Paar Wände (30) gehen, teilweise drehen können.

21. Fluid-Durchflußmesser (10) nach einem der Ansprüche 14 bis 20,
wobei das erste Paar Wände (30) eine nach innen weisende Fläche aufweist, die antistatische und wasserabweisende Eigenschaften hat.

22. Fluid-Durchflußmesser (10) nach einem der vorstehenden Ansprüche,
wobei die Überwachungseinrichtung (70) über eine gemessene Zeitspanne elektrische Signale empfängt, die Rate der elektrischen Signale bestimmt, das Volumen der Quanten, basierend auf der elektrischen Signalrate bestimmt und dabei eine Fluidströmungsgeschwindigkeit entlang des Strömungswegs (14) ermittelt.

23. Fluid-Durchflußmesser (10) nach einem der vorstehenden Ansprüche,
mit weiterhin einem Temperatursensor (110) zum Erfassen der Temperatur des Fluids.

24. Fluid-Durchflußmesser (10) nach Anspruch 23,
wobei die Ablesungen, die vom Temperatursensor (110) erzeugt werden, dazu verwendet werden, eine Alarmanzeige zu liefern, wenn die Temperatur des Fluids über einen vorbestimmten Wert steigt.

25. Fluid-Durchflußmesser (10) nach einem der vorstehenden Ansprüche,
mit weiterhin einem Drucksensor (108) zum Erfassen des Fluiddrucks.

26. Fluid-Durchflußmesser (10) nach Anspruch 25,
wobei die Ablesungen, die vom Drucksensor (108) erzeugt werden, dazu verwendet werden, eine Alarmanzeige zu liefern, wenn der Fluiddruck unter einen vorbestimmten Schwellwert fällt.

27. Fluid-Durchflußmesser (10) nach einem der vorstehenden Ansprüche,
mit weiterhin sowohl einem Drucksensor (108) als auch ein Temperatursensor (110) vorgesehen sind, wobei ein vorbestimmter Wert des Volumens jedes Quantums Fluid in Übereinstimmung mit den von diesen Sensoren erhaltenen Druck- und Temperaturdaten eingestellt ist.

28. Fluid-Durchflußmesser (10) nach einem der vorstehenden Ansprüche, mit weiterhin einer zentralen Datensammeleinheit, mit der der Durchflußmesser (10) Information bezüglich der Fluidströmung, wie sie durch den Durchflußmesser (10) gemessen ist, austauschen kann.

29. Fluid-Durchflußmesser (10) nach Anspruch 28,
wobei der Fluid-Durchflußmesser (10) mit der zentralen Datensammeleinheit (106) mittels einer Wähleinrichtung (78) und einer Telefonleitung (81) kommunizieren kann, wobei die Wähleinrichtung (78) so arbeitet, daß sie automatisch die zentrale Datensammeleinheit (106) anwählt und die Information zu ihr hinschickt.

30. Fluid-Durchflußmesser (10) nach einem der vorstehenden Ansprüche,
wobei die vorher eingestellten Werte für Volumen jedes Quantums Fluid bei verschiedenen Strömungsgeschwindigkeiten in einer Nachschlagtabelle enthalten sind.

31. Fluid-Strömungsmesser (10) nach einem der vorstehenden Ansprüche,
wobei ein vorher eingestellter Wert des Quantums Fluid mit einem Quantumswert entsprechend der berechneten Strömungsgeschwindigkeit ver-glichen wird, wobei der vorher eingestellte Wert in Abhängigkeit von diesem Vergleich auf einen anderen Wert geändert wird, derart, daß die durch Wiederholen der Rechenschritte und des Vergleichens der Werte in iterativer Weise der vorher eingestellte Wert in einen "wahren" Quantumswert geändert wird.

32. Fluid-Durchflußmesser (10) nach einem der vorstehenden Ansprüche,
wobei die Überwachungseinrichtung (70) eine Einrichtung (68) zum Speichern eines vorbestimmten Volumenwertes für ein einzelnes Quantum des Fluidstroms, eine Einrichtung (70) zum Berechnen einer Fluidströmungsrate entsprechend einer Anzahl von elektrischen Signalen, die über eine gemessene Zeitspanne erhalten worden sind, eine Einrichtung (70) zum Vergleichen des vorbestimmten Wertes für ein einzelnes Quantum mit einem Volumenwert entsprechend der Strömungslieferungs-Charakteristika des Durchflußmessers (10) bei der ersten Strömungsrate, eine Einrichtung (70) zum Einstellen des vorbestimmten Wertes auf einen Volumenwert entsprechend der Strömungslierferungscharakteristika und eine Einrichtung (70) zum wiederholten Einstellen des vorbestimmten Volumenwertes eines einzelnen Fluidquantums aufweist, um einen steigend genaueren Durchflußwert zu erhalten.

## Revendications

1. Débitmètre de fluide (10) comprenant un logement (12) possédant un orifice de fluide d'entrée et de sortie (18, 22) et définissant un trajet d'écoulement (14) de fluide entre les deux ; une membrane flexible (35) définissant une paire de faces s'opposant et étant montée par des première et seconde extrémités opposées (51) dans ledit trajet d'écoulement de fluide, de sorte que la paire de faces s'opposant définit simultanément avec ledit logement (12) des joints imperméables au fluide en au moins deux positions différentes le long dudit trajet d'écoulement (14), ladite membrane (35) fonctionnant pour fléchir de façon à permettre le passage au-delà d'elle-même de quantités discrètes de fluide, chacune ayant un volume connu ; des moyens pour générer des signaux électriques correspondant à la flexion de ladite membrane (35) ; et des moyens de contrôle (70) destinés à recevoir les signaux électriques et à déterminer ainsi un débit de fluide le long dudit trajet d'écoulement (14), caractérisé en ce que ladite première extrémité (51) de la membrane (35) est montée à l'aval de l'orifice de fluide d'entrée (18) et un appareil de guidage (48, 60) destiné à guider la membrane (35) est monté dans le logement (12) de façon adjacente à au moins ladite première extrémité (51) pour venir en aboutement contre la membrane (35), dans l'une ou l'autre des deux positions respectives prises juste avant et après la libération d'une quantité de fluide.

2. Débitmètre de fluide (10) selon la revendication 1, dans lequel l'appareil de guidage (48, 60) comprend un prolongement de guidage (60).

3. Débitmètre de fluide (10) selon la revendication 2, dans lequel ledit prolongement de guidage (60) est perméable.

4. Débitmètre de fluide (10) selon la revendication 2 ou 3, dans lequel ladite membrane (35) est pourvue d'un contact électrique (61) destiné à entrer en contact avec un contact électrique correspondant (63) monté sur ledit prolongement de guidage (60).

5. Débitmètre de fluide (10) selon l'une quelconque des revendications 1 à 4, dans lequel ledit appareil de guidage (48, 60) comprend un élément à guide (48).

6. Débitmètre de fluide (10) selon l'une quelconque des revendications précédentes, dans lequel ladite membrane flexible (35) comprend une couche de matière piézoélectrique (36).

7. Débitmètre de fluide (10) selon la revendication 6, dans lequel ladite membrane flexible (35) comprend additionnellement une paire de couches métallisées (38, 40) entourant ladite couche de matière piézoélectrique (36).

8. Débitmètre de fluide (10) selon la revendication 7, dans lequel lesdits films métallisés (38, 40) comprennent des bandes métallisées discrètes (44) recouvrant l'une ou l'autre ou bien les deux faces de ladite matière piézoélectrique (36).

9. Débitmètre de fluide (10) selon l'une quelconque des revendications 6 à 8, dans lequel ladite matière piézoélectrique est un polyfluorure de vinylidène.

10. Débitmètre de fluide (10) selon l'une quelconque des revendications précédentes, dans lequel la membrane flexible (35) possède une épaisseur en section transversale différente le long des parties sélectionnées de sa longueur de façon à réduire la possibilité d'une défaillance de la membrane (35) provoquée par des contraintes de fatigue.

11. Débitmètre de fluide (10) selon la revendication 10, dans lequel ladite membrane flexible (35) est pourvue d'extrémités (46) à section transversale épaissie.

12. Débitmètre de fluide (10) selon l'une quelconque des revendications précédentes, dans lequel ledit logement (12) comprend une première chambre de réception d'extrémité (26) destinée à recevoir l'écoulement de fluide provenant de l'orifice de fluide d'entrée (18) avant le passage du fluide à travers ledit trajet d'écoulement de fluide (14), ladite chambre (26) permettant aux débris provenant dudit fluide d'y être déposés avant l'écoulement à travers ledit trajet d'écoulement de fluide (14).

13. Débitmètre de fluide (10) selon l'une quelconque des revendications précédentes, dans lequel ladite membrane flexible (35) définit en outre une paire de bords (33) reposant dans des plans respectifs sensiblement parallèles à la direction de l'écoulement de fluide et ledit trajet d'écoulement de fluide (14) possède une configuration en section transversale uniforme le long d'au moins une partie de sa longueur, lesdits joints imperméables au fluide étant définis sur cette longueur.

14. Débitmètre de fluide (10) selon la revendication 13, dans lequel ladite partie de ladite longueur de trajet d'écoulement de fluide ayant une configuration en section transversale uniforme possède une configuration en section transversale rectangulaire et est définie par des première et seconde paires de parois parallèles (30, 29), ladite membrane (35) étant disposée entre ces dernières, de sorte que lesdits plans respectifs dans lesquels lesdits bords de membrane (33) reposent sont alignés sensiblement parallèlement à ladite première paire de parois (30).

15. Débitmètre de fluide (10) selon la revendication 14, dans lequel ladite seconde paire de parois parallèles (29) est non rigide.

16. Débitmètre de fluide (10) selon la revendication 15, dans lequel ladite seconde paire de parois parallèles (29) est fabriquée en élastomère flexible.

17. Débitmètre de fluide (10) selon l'une quelconque des revendications 14 à 16, dans lequel lesdits joints imperméables au fluide sont définis en au moins trois positions le long dudit trajet d'écoulement de fluide (14).

18. Débitmètre de fluide (10) selon la revendication 17, dans lequel lesdits bords de membrane (33) sont écartés de ladite première paire de parois (30) par sensiblement une épaisseur de couche limite de fluide.

19. Débitmètre de fluide (10) selon l'une quelconque des revendications 14 à 18, dans lequel ladite membrane flexible (35) possède une configuration rectangulaire et est orientée de façon telle que son axe longitudinal repose parallèlement à la direction de l'écoulement.

20. Débitmètre de fluide (10) selon l'une quelconque des revendications 14 à 19, dans lequel lesdites première et seconde extrémités (51) de ladite membrane flexible (35) sont montées pour une rotation partielle autour des premier et second axes respectifs qui s'étendent parallèlement à la seconde paire de parois (29) et passent à travers ladite première paire de parois (30).

21. Débitmètre de fluide (10) selon l'une quelconque des revendications 14 à 20, dans lequel ladite première paire de parois (30) définit une surface tournée vers l'intérieur ayant des propriétés antistatiques et hydrophobes.

22. Débitmètre de fluide (10) selon l'une quelconque des revendications précédentes, dans lequel les moyens de contrôle (70) reçoivent des signaux électriques pendant une durée mesurée, déterminant la cadence desdits signaux électriques, déterminant le volume desdites quantités sur la base de ladite cadence de signaux électriques, et déterminant ainsi un débit de fluide le long dudit trajet d'écoulement (14).

23. Débitmètre de fluide (10) selon l'une quelconque des revendications précédentes, comprenant en outre un capteur de température (110) destiné à détecter la température dudit fluide.

24. Débitmètre de fluide (10) selon la revendication 23, dans lequel les lectures générées par ledit capteur de température (110) sont utilisées pour donner une indication d'alarme lorsque la température dudit fluide s'élève au-dessus d'un niveau prédéterminé.

25. Débitmètre de fluide (10) selon l'une quelconque des revendications précédentes, comprenant en outre un capteur de pression (108) destiné à détecter la pression dudit fluide.

26. Débitmètre de fluide (10) selon la revendication 25, dans lequel les lectures générées par ledit capteur de pression (108) sont utilisées pour donner une indication d'alarme lorsque la pression dudit fluide chute au-dessous d'une valeur de seuil prédéterminée.

27. Débitmètre de fluide (10) selon l'une quelconque des revendications précédentes, comprenant en outre un capteur de pression (108) et un capteur de température (110), une valeur prédéterminée du volume de chaque quantité de fluide étant ajustée selon les données de pression et de température reçues à partir de ces capteurs.

28. Débitmètre de fluide (10) selon l'une quelconque des revendications précédentes, comprenant en outre un appareil d'acquisition des données centralisé avec lequel le débitmètre (10) peut communiquer des informations se rapportant à l'écoulement de fluide tel qu'il est mesuré par ledit débitmètre (10).

29. Débitmètre de fluide (10) selon la revendication 28, dans lequel le débitmètre de fluide (10) peut communiquer avec ledit appareil d'acquisition des données centralisé (106) au moyen d'un dispositif d'appel (78) et d'une ligne téléphonique (81), le dispositif d'appel (78) fonctionnant pour appeler automatiquement ledit appareil d'acquisition des données centralisé (106) et pour envoyer lesdites informations à celui-ci.

30. Débitmètre de fluide (10) selon l'une quelconque des revendications précédentes, dans lequel les valeurs préréglées du volume de chaque quantité de fluide à différents débits sont contenues dans une table à consulter.

31. Débitmètre de fluide (10) selon l'une quelconque des revendications précédentes, dans lequel une valeur préréglée d'une quantité de fluide est comparée à la valeur de quantité correspondant au débit calculé, ladite valeur préréglée étant modifiée à une valeur différente en réponse à ladite comparaison, de sorte qu'en répétant les étapes de calcul et de comparaison desdites valeurs de façon itérative, ladite valeur préréglée est modifiée jusqu'à une valeur de quantité "vraie".

32. Débitmètre de fluide (10) selon l'une quelconque des revendications précédentes, dans lequel l'appareil de contrôle (70) comprend un appareil (68) pour mémoriser une valeur prédéterminée de volume pour une seule quantité d'écoulement de fluide, l'appareil (70) pour calculer un débit de fluide correspondant à un certain nombre de signaux électriques reçus sur une durée mesurée, l'appareil (70) pour comparer la valeur prédéterminée d'une seule quantité avec une valeur de volume correspondant aux caractéristiques de refoulement d'écoulement du débitmètre (10) au premier débit d'écoulement, l'appareil (70) pour ajuster la valeur prédéterminée à la valeur de volume correspondant aux caractéristiques de refoulement d'écoulement, et l'appareil (70) pour ajuster de façon répétitive la valeur prédéterminée de volume d'une seule quantité de fluide de façon à obtenir une valeur de plus en plus précise de l'écoulement.
